# EUROPÄISCHE PATENTSCHRIFT

(11) **EP 3 848 130 B1**
(45) Veröffentlichungstag und Bekanntmachung des Hinweises auf die Patenterteilung: **02.08.2023**
(21) Anmeldenummer: 21150756.1
(22) Anmeldetag: 08.01.2021
(51) Int. Cl.: B08B 9/055, F17D 3/08, F16L 55/42, F16L 101/12

(54) **VERFAHREN UND VORRICHTUNG ZUR REINIGUNG EINES ROHRFÖRMIGEN HOHLRAUMS MITTELS EINES PASSIVEN, KONTURADAPTIVEN MOLCHS**
METHOD AND DEVICE FOR CLEANING A TUBULAR CAVITY BY MEANS OF A PASSIVE, CONTOUR-ADAPTIVE PIG
PROCÉDÉ ET DISPOSITIF DE NETTOYAGE D'UNE CAVITÉ EN FORME DE TUBE AU MOYEN D'UN RACLEUR PASSIF ADAPTATIF AU CONTOUR

(30) Priorität: 13.01.2020 DE 102020000143; 24.07.2020 DE 102020119591
(43) Veröffentlichungstag der Anmeldung: 14.07.2021
(73) Patentinhaber: Fraunhofer-Gesellschaft zur Förderung der angewandten Forschung e.V., 80686 München (DE)
(72) Erfinder: BOYE, André, 01156 Dresden (DE); ROTHKOPF, Isabell, 85356 Freising (DE); NAUMANN, Susanne, 85435 Erding (DE)
(74) Vertreter: Gottfried, Hans-Peter

(56) Entgegenhaltungen:
- WO-A1-02/096574
- WO-A1-2004/000475
- WO-A1-2009/054733
- US-A1- 2003 140 944
- US-A1- 2009 067 931
- Industrievereinigung für Lebensmitteltechnologie und Verpackung e.V.: "Chocolate Pigging", , 2019, XP002803152, Gefunden im Internet: URL:https://www.ivlv.org/en/project/chocol ate-pigging/ [gefunden am 2021-06-01]

## Beschreibung

Die Erfindung betrifft ein Verfahren zur Reinigung rohrförmiger Hohlräume mittels eines passiven, konturadaptiven Molchs und eine Vorrichtung zur Reinigung eines rohrförmigen Hohlraums, ausgebildet als ein passiver, löslicher Molch, geeignet zum Austreiben eines Vorgängerprodukts aus dem Hohlraum. Der Einsatz erfolgt insbesondere dort, wo der Molch nach dem Molchdurchlauf nicht mehr aus dem Rohr entnommen oder mit dem Treibmedium zurückgefahren werden kann bzw. falls die Rohrleitungen traditionelle Molchverfahren geometriebedingt nicht zulassen. Ursache sind zumeist technische, ökonomische oder hygienische Gründe. Der Molch hat keinen eigenen Antrieb, sondern bewegt sich mit der Strömung eines Treibmediums im Rohr. Ein konturadaptiver Molch ist formatvariabel und kann sich an die die Form einer Rohrleitung anpassen, auch über Bögen und in einem bestimmten Rahmen auch über veränderliche Querschnitte oder Querschnittsprünge hinweg.

Aus dem Stand der Technik sind verschiedene Arten von nicht-formatstabilen Molchen, insbesondere ausgeführt als sogenannte Eismolche, bekannt. Vor allem aus den Druckschriften CN 207446892 UU und CN 107716480 A ist die Herstellung einer Eissuspension auf Basis von Wasser über einen Generator für feine Eiskristalle, einen Kristallisator und eine Komponente zur Einstellung der Suspension bekannt. Die Druckschrift CN 107661886 A bedient sich zwar auch einer Eissuspension, nutzt diese jedoch nicht als einen "biegsamen Molch", sondern macht sich die abrasiven Effekte der Kristalle an der Rohrwandung zunutze. Ein ähnlicher Effekt wird in der Druckschrift WO 2017/198684 A1 beschrieben, wobei hier explizit auf Lebensmittelanlagen abgestellt wird. Auch die Druckschriften JP 2008296168 A, CN 203936084 UU und CN 103706602 A befassen sich mit der Eisbildung zum Zweck der Rohrreinigung bzw. der Rohrwandreinigung.

Das Dokument WO 2004/000475 A1 offenbart ein Verfahren zur Reinigung eines rohrförmigen Hohlraums gemäß dem Oberbegriff des Anspruchs 1, und eine Vorrichtung zur Reinigung eines rohrförmigen Hohlraums gemäß dem Oberbegriff des Anspruchs 10.

Nach dem Stand der Technik ist es zur Ausbildung eines Eismolchs erforderlich, Wassereis oder eine solche Eissuspension in den rohrförmigen Hohlraum einzubringen. Nach dem Aufschmelzen des Eismolchs würde das entstehende Wasser das vorgesehen Produkt verunreinigen, insbesondere, wenn es sich um ein nicht wasserlösliches Produkt handelt.

Es ist daher Aufgabe der vorliegenden Erfindung, die Funktion eines Eismolchs derart weiterzubilden, dass eine Verunreinigung des Produkts in dem zu reinigenden Hohlraum verhindert wird.

Die Aufgabe wird, gemäß Anspruch 1, gelöst durch ein Verfahren zur Reinigung eines rohrförmigen Hohlraums mittels eines passiven, konturadaptiven Molchs. Erfindungsgemäß besteht der Molch aus einer Feststoffsuspension und wird, wenn nicht schon vorverdichtet, durch ein nachfolgendes Treibmedium zu einer dichten Packung gedrängt und in dem rohrförmigen Hohlraum vorangetrieben. Der rohrförmige Hohlraum ist beispielsweise Teil einer Anlage zur Verarbeitung von Schokolade.

Die dichte Packung der Feststoffsuspension, die den erfindungsgemäßen Molch bildet, muss eine solche Dichte und insbesondere Stabilität erreichen, dass das Vorgängerprodukt ohne die Entstehung von Mischphasen oder deren erhebliche Verringerung zwischen Feststoffsuspension und Vorgängerprodukt ausgeschoben wird. Die Feststoffsuspension setzt sich aus einer Festphase mit mindestens 60 % Massenanteil zusammen, die nur schwer bzw. unlöslich gegenüber der Flüssigphase ist. Dies wird erreicht durch eine geeignete Kombination von Festphase und Flüssigphase. Während beispielsweise eine Festphase Zucker in einer Flüssigphase Wasser löslich wäre, ist hingegen eine Flüssigphase Öl geeignet, da dieser gegenüber Zucker als unlöslich anzusehen ist. Zumindest muss die Löslichkeit so gering sein und der Molch solange standhalten, dass das Ausschieben des Vorgängerprodukts nicht beeinträchtigt wird. Die Feststoffsuspension kann aus unterkühlten Schokoladenkügelchen und/oder -häckseln als dem Feststoffanteil sowie aus Kakaobutter und/oder Schokolade als der Flüssigphase zusammengesetzt sein. Als das Treibmedium ist bevorzugt das Nachfolgeprodukt oder ein mit Druck beaufschlagtes Gas vorgesehen.

Neben geeigneten Korngrößen-Mischungen machen aus den genannten funktionalen Eigenschaften korngrößenspezifisch sequenziell aufgebaute Molche in vielen Fällen Sinn. Es hat sich daher als vorteilhaft erwiesen, wenn der Molch aus funktionalen Gründen in seiner stofflichen Zusammensetzung über die Länge variiert. Der Molch ist dazu in der Weise zusammengesetzt, dass ein vorderes Drittel feine Partikel aufweist für die "Dichtheit" des Molches gegen Eindringen des Vorgängerprodukts. Die Partikelgröße bzw. -verteilung wird, auch in Abhängigkeit von der Viskosität des Vorgängerprodukts, entsprechend gewählt. Der Molch ist somit geeignet zum Ausschieben. Beispielsweise kann Staubzucker oder Feinzucker (≤ 100...200 µm) hierzu vorgesehen sein, wenn Öl als Flüssigphase zum Einsatz kommt, bei niedrigviskoser Flüssigphase muss die Partikelgröße < 100 µm betragen. Für andere Anwendungen, mit pastöseren auszuschiebenden Produkten, kann die Korngröße auch deutlich höher sein.

Ein mittlerer Teil des Molchs weist grobe Kristalle auf für hohe abrasive Reinigungswirkung auf der Rohrwandung und Aufnahme der so abgelösten Verschmutzung. Bevorzugt sind hier Korngrößen ≤ 1...2 mm, jedoch > 200 µm. Ein in Laufrichtung des Molchs hinteres Drittel wird wiederum durch feine Partikel, z. B. Kristalle, gebildet, die ebenfalls für die "Dichtheit", hier jedoch gegenüber dem Treibmedium, und zur Feinreinigung noch verbliebener sehr dünner Verschmutzungsrückstände auf der Rohrwandung, die eine geringe Schichtdicke aufweisen, geeignet sein müssen.

Bei einem bevorzugten Einsatz des erfindungsgemäßen Verfahrens ist der rohrförmige Hohlraum zumindest Teil einer Anlage zur Verarbeitung von Schokolade. In dem Fall ist die Feststoffsuspension zumindest aus Kristall- und/oder Staub- bzw. Feinstzucker als Feststoffanteil sowie aus Öl und/oder Kakaobutter und/oder erwärmte Schokolade als Flüssigphase der Feststoffsuspension zusammengesetzt. Puderzucker wird auch Staubzucker genannt.

Durch unterschiedliche Korngrößen und deren gezielte Kombination in der Feststoffphase lassen sich die funktionalen Eigenschaften des Molchs einstellen. Feststoffphasen mit Korngrößen von über 200 µm zeigen durch ihre abrasive Wirkung eine zunehmende starke Reinigungswirkung, sind aber von niedrigviskosen Vorgängerprodukten leicht zu durchdringen. Demgegenüber zeigen Festphasen, die einen Anteil von Partikeln kleiner 100 µm besitzen, eine geringe Neigung vom auszuschiebenden Produkt durchdrungen zu werden, wodurch der Molch kompakt bleibt.

Fest- und Flüssigphase unterscheiden sich jeweils stofflich und/oder in ihrem stofflichen Gefüge. Die Festphase besitzt eine höhere Schmelztemperatur als die Flüssigphase. Ein Material, eine Flüssigphase, kann mit Kristallisationskeimen versetzt sein, so dass sich in der Flüssigphase und aus dieser heraus Kristalle als Festphase bilden. Der Feststoffanteil kann mindestens 60% Massenanteil an der Gesamtmasse der Feststoffsuspension einnehmen. Es hat sich als vorteilhaft erwiesen, wenn der Molch ausschließlich aus als Lebensmittel zugelassen Stoffen besteht.

Ein weiterer Aspekt der Erfindung betrifft, gemäß Anspruch 10, eine Vorrichtung zur Reinigung eines rohrförmigen Hohlraums mittels eines passiven, konturadaptiven Molchs. Nach der Erfindung ist es vorgesehen, dass der Molch aus einer Feststoffsuspension besteht. Diese ist so beschaffen, dass sie durch ein nachfolgendes Treibmedium oder sonstiger Verdichtung zu einer dichten Packung, wie oben definiert, gedrängt werden kann. Dies wird beispielsweise erreicht durch die Zusammensetzung der Feststoffsuspension und vor allem der Anteile an Festphase und Flüssigphase sowie deren Eigenschaften, beispielsweise Korngrößenverteilung (Festphase) oder Viskosität (Flüssigphase) sowie deren Massenanteile gegenüber dem Vorgänger- bzw. Nachfolgeprodukt, mit denen ein unmittelbarer Kontakt besteht. Die dichte Packung der Feststoffsuspension bewirkt, dass das Vorgängerprodukt ohne die Entstehung von Mischphasen oder deren weitgehende Vermeidung zwischen Feststoffsuspension und Vorgängerprodukt ausgeschoben werden kann. Die Feststoffsuspension setzt sich aus Partikeln, die eine Festphase ausbilden, sowie einer Flüssigphase zusammen.

Die Vorrichtung umfasst vorteilhafterweise eine Einrichtung zur Ausbildung der Feststoffsuspension. Sie umfasst in ihrer bevorzugten Ausführungsform weiterhin eine Einrichtung zur Einschleusung der Feststoffsuspension in den rohrförmigen Hohlraum. Alternativ dazu wird die Feststoffsuspension in einem Abschnitt des rohrförmigen Hohlraums, z. B. in einer zu reinigenden Produktleitung, ausgebildet.

In einem bevorzugten Einsatzgebiet ist der rohrförmige Hohlraum zumindest Teil einer Anlage zur Verarbeitung von Schokolade. In der bevorzugten Ausführungsform ist deshalb die Feststoffsuspension zumindest aus Kristall- und/oder Staub- bzw. Feinstzucker als Feststoffanteil sowie aus Öl und/oder Kakaobutter und/oder erwärmte Schokolade als Flüssigphase zusammengesetzt. Besonders bevorzugt kommen Bestandteile des Vorgängerprodukts, das Nachfolgeprodukts oder Bestandteile die dessen Eigenschaften nicht negativ beeinflussen zum Einsatz.

Die erfindungsgemäße Feststoffsuspension ist in ihrer Anwendung als Molch zur Reinigung jedoch nicht auf die vorgenannte Gruppe von Anlagen beschränkt und auch nicht auf den Einsatz mit nicht wasserlöslichen Produkten. Die Schokoladenstoffe stellen aber eine Stoffgruppe dar, die in deiner großen Vielzahl von Eigenschaften verfügbar ist. Dies ergibt sich aus den zahlreichen verschiedenen Typen von Schokolade (z. B. dunkel, weiß, Milchschokolade) und der Vielzahl von Füllungen (Nougat, Cremefüllung, etc.).

Die vorliegende Erfindung stellt eine vorteilhafte Alternative zu herkömmlicher Molchtechnik bzw. zur Verwendung einer Ice Slurry dar, die einen Einsatz in nicht wasserlöslichen Produkten bzw. Produkten, die nicht mit Wasser in Kontakt kommen dürfen. Ferner betrifft das vorgeschlagene Verfahren einen Molch, der im Gegensatz zur Ice Slurry auch über große Rohrleitungsstrecken seine Eigenschaften nicht verändert oder gar verliert. Durch das erfindungsgemäße Verfahren werden bis zu 99 % des Vorgängerprodukts aus der Anlage entfernt.

Der Molch wird mit einer Molchgeschwindigkeit von 0,01 m/s ≤ v ≤ 1 m/s, bevorzugt v ≤ 0,5 m/s durch den rohrförmigen Hohlraum geschoben. Bei höheren Geschwindigkeiten wird der Molch zu leicht durchstoßen bzw. zerstört, vor allem durch Turbulenzen, noch niedrigere Geschwindigkeiten sind nicht wirtschaftlich.

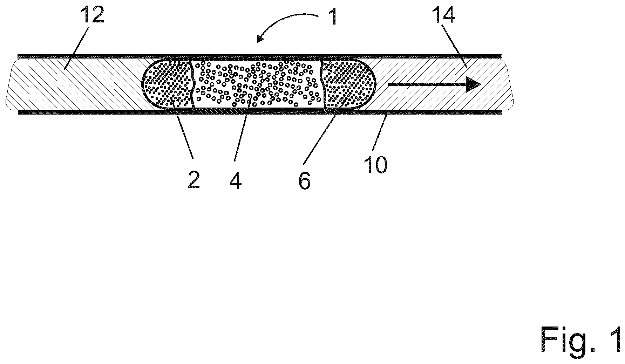

Die Erfindung wird anhand eines Ausführungsbeispiels näher erläutert. Fig. 1 zeigt einen Molch 1 bei der Bewegung in Pfeilrichtung durch einen Hohlraum, ein Rohr 10. Aus dem Rohr 10 soll eine Produktsuspension 14, im Ausführungsbeispiel eine Schokoladenmasse, ausgeschoben werden. Dies erfolgt mit dem Molch 1, der durch ein Treibmedium 12, im Ausführungsbeispiel eine andere Art Schokoladenmasse, das Nachfolgeprodukt, vorangetrieben wird

Der Molch 1 besteht aus drei verschiedenen Abschnitten, die jeweils aus einer Feststoffsuspension 2, 4, 6 gebildet werden. Ein vorderes Drittel, eine Feststoffsuspension im Frontbereich 6, weist feine Partikel auf und schützt gegen das Eindringen des Vorgängerprodukts 14. Die Partikelgröße des Staubzuckers oder Feinzuckers (≤ 100...200 µm) ist hierzu vorgesehen, da Öl als Flüssigphase zum Einsatz kommt.

Ein mittlerer Teil des Molchs, eine Feststoffsuspension im Zentralbereich 4, weist grobe Kristalle auf für hohe abrasive Reinigungswirkung auf der Rohrwandung und Aufnahme der so abgelösten Verschmutzung. Hier sind Korngrößen ≤ 1...2 mm vorgesehen. Ein in Laufrichtung des Molchs hinteres Drittel, eine Feststoffsuspension im Endbereich 2, wird wiederum durch feine Partikel, z. B. Zuckerkristalle, gebildet, die ebenfalls für die "Dichtheit", hier jedoch gegenüber dem Treibmedium 12, und zur Feinreinigung noch verbliebener sehr dünner Verschmutzungsrückstände auf der Wandung des Rohrs 10 geeignet sein müssen.

## Patentansprüche

1. Verfahren zur Reinigung eines rohrförmigen Hohlraums mittels eines passiven, konturadaptiven Molchs, wobei der Molch (1) aus wenigstens einer Feststoffsuspension (2, 4, 6), die durch eine Festphase und eine Flüssigphase gebildet wird, mit im Vergleich zu der in dem Hohlraum (10) üblicherweise verarbeiteten Produktsuspension (14) hohem Feststoffanteil besteht und durch ein nachfolgendes Treibmedium (12) oder durch eine vorherigen Verdichtung zu einer dichten Packung gedrängt wird und die dichte Packung der wenigstens einen Feststoffsuspension (2, 4, 6) eine solche Dichte und Stabilität aufweist, dass die Produktsuspension (14) des Vorgängerprodukts ohne die Entstehung von Mischphasen zwischen der wenigstens einen Feststoffsuspension (2, 4, 6), dem Vorgängerprodukt und/oder dem Treibmedium (12) ausgeschoben wird, wobei die Festphase der Feststoffsuspension (2, 4, 6) aus Partikeln besteht, die sich in der Flüssigphase nicht oder nur so wenig lösen, dass das Ausschieben des Vorgängerprodukts nicht beeinträchtigt wird, wobei der Molch (1) eine über die Länge variierende stoffliche Zusammensetzung aufweist, wobei jeder Bereich einer Zusammensetzung eine andere Teilfunktion ausübt, **dadurch gekennzeichnet, dass** ein in Laufrichtung des Molchs (1) vorderes Drittel aus der ersten Feststoffsuspension (6) besteht, deren Festphase aus feinen Partikeln einer ersten Partikelgröße besteht, die den Molch (1) gegen das Eindringen der Produktsuspension (14) des Vorgängerprodukts abdichten, ein mittlerer Teil des Molchs aus der zweiten Feststoffsuspension (4) besteht, deren Festphase grobe Kristalle einer zweiten Partikelgröße aufweist, die größer als die erste Partikelgröße ist und eine hohe abrasive Reinigungswirkung auf einer Rohrwandung und die Aufnahme der abgelösten Verschmutzung erzeugt, und ein hinteres Drittel aus der Feststoffsuspension (2) besteht, deren Festphase durch feine Partikel einer dritten Partikelgröße gebildet wird, die kleiner als die zweite Partikelgröße ist, die den Molch gegenüber dem Treibmedium (12) abdichten und die Rohrwandung von noch verbliebenen Verschmutzungsrückständen geringer Schichtdicke reinigt.

2. Verfahren nach Anspruch 1, wobei als das Treibmedium (12) ein Nachfolgeprodukt vorgesehen ist.

3. Verfahren nach Anspruch 1, wobei als das Treibmedium (12) ein mit Druck beaufschlagtes Gas vorgesehen ist.

4. Verfahren nach einem der vorherigen Ansprüche, wobei die Festphase der Feststoffsuspension (2, 4, 6) eine höhere Schmelztemperatur als die Flüssigphase besitzt.

5. Verfahren nach einem der vorherigen Ansprüche, wobei eine Flüssigphase mit Kristallisationskeimen versetzt ist, so dass sich darin Kristalle als Festphase bilden.

6. Verfahren nach einem der vorherigen Ansprüche, wobei der Feststoffanteil der Feststoffsuspension (2, 4, 6) mindestens 60% Massenanteil an der Gesamtmasse der Feststoffsuspension (2, 4, 6) einnimmt.

7. Verfahren nach einem der vorherigen Ansprüche, wobei die Festphase der Feststoffsuspension (2, 4, 6) aus Kristallzucker und/oder Puderzucker und die Flüssigphase aus Öl oder Fett besteht.

8. Verfahren nach einem der vorherigen Ansprüche, wobei der Molch (1) mit einer Geschwindigkeit von 0,01 m/s ≤ v ≤ 1 m/s durch den rohrförmigen Hohlraum (10) geschoben wird.

9. Verfahren nach einem der vorherigen Ansprüche, wobei die Feststoffsuspension (2, 4, 6) zumindest aus unterkühlten Schokoladenkügelchen und/oder -häckseln als der Festphase sowie aus Kakaobutter und/oder Schokolade als der Flüssigphase zusammengesetzt ist.

10. Vorrichtung zur Reinigung eines rohrförmigen Hohlraums, ausgebildet als ein passiver, löslicher Molch, geeignet zum Austreiben eines Vorgängerprodukts aus dem Hohlraum, wobei der Molch (1) aus einer Feststoffsuspension (2, 4, 6) mit im Vergleich zu der in dem Hohlraum (10) üblicherweise verarbeiteten Produktsuspension (14) hohem Feststoffanteil besteht und zu einer dichten Packung komprimierbar ist oder durch ein nachfolgendes Treibmedium zu einer dichten Packung drängbar ist und die dichte Packung so dicht und stabil ist, dass der Molch (1) ein Vorgängerprodukt (14) ohne die Entstehung von Mischphasen zwischen der Feststoffsuspension (2, 4, 6) und dem Vorgängerprodukt (14) ausschieben kann, **dadurch gekennzeichnet, dass** die Feststoffsuspension (2, 4, 6) einen in der vorgesehenen Laufrichtung des Molchs (1) vorderen Abschnitt umfasst, eine Feststoffsuspension (6) im Frontbereich mit feineren Partikeln als ein mittlerer Teil des Molchs (1) mit einer Feststoffsuspension (4) im Zentralbereich mit gröberen Partikeln, und einen hinteren Abschnitt, eine Feststoffsuspension (2) im Endbereich, mit wiederum feineren Partikeln als der mittlere Teil des Molchs (1).

11. Vorrichtung nach Anspruch 10, wobei sich die Feststoffsuspension (2, 4, 6) einerseits aus unterkühlten Partikeln oder Partikeln, die eine höhere Schmelztemperatur und die gleiche oder eine höhere Temperatur aufweisen, wie die Flüssigphase, und die eine Festphase ausbilden, sowie andererseits aus einer Flüssigphase zusammensetzt.

12. Vorrichtung nach Anspruch 11, umfassend eine Einrichtung zur Ausbildung der Feststoffsuspension (2, 4, 6) und/oder umfassend eine Einrichtung zur Einschleusung der Feststoffsuspension (2, 4, 6) in den rohrförmigen Hohlraum (10).

13. Vorrichtung nach einem der Ansprüche 10 bis 12, derart ausgebildet, dass die Feststoffsuspension (2, 4, 6) in einem Abschnitt des rohrförmigen Hohlraums (10) ausbildbar ist.

## Claims

1. A method for cleaning a tubular cavity by means of a passive, contour-adaptive pig, the pig (1) consisting of at least one solid suspension (2, 4, 6) formed by a solid phase and a liquid phase and having a high solid content compared to the product suspension (14) usually processed in the cavity (10), and being forced into a dense packing by a subsequent propellant (12) or by prior compaction, and the dense packing of the at least one solid suspension (2, 4, 6) having such a density and stability that the product suspension (14) of the predecessor product is expelled without the formation of mixed phases between the at least one solid suspension (2, 4, 6), the predecessor product and/or the propellant (12), the solid phase of the solid suspension (2, 4, 6) consisting of particles which do not dissolve in the liquid phase or dissolve only to such an extent that the expulsion of the predecessor product is not impaired, the pig (1) having a material composition which varies across its length, each region of composition performing a different subfunction, **characterized in that** a front third in the direction of travel of the pig (1) consists of the first solid suspension (6), the solid phase of which consists of fine particles of a first particle size which seal the pig (1) against ingress of the product suspension (14) of the predecessor product, a middle part of the pig consists of the second solid suspension (4), the solid phase of which has coarse crystals of a second particle size which is larger than the first particle size and produces a high abrasive cleaning effect on a pipe wall and absorption of the detached contamination, and a rear third consists of the solid suspension (2), the solid phase of which is formed by fine particles of a third particle size which is smaller than the second particle size, which seal the pig with respect to the propellant (12) and clean the pipe wall from remaining contamination residues of low layer thickness.

2. The method according to claim 1, wherein a successor product is provided as the propellant (12).

3. The method according to claim 1, wherein a pressurized gas is provided as the propellant (12).

4. The method according to any one of the preceding claims, wherein the solid phase of the solid suspension (2, 4, 6) has a higher melting temperature than the liquid phase.

5. The method according to any one of the preceding claims, wherein a liquid phase is mixed with crystallization nuclei, so that crystals form therein as the solid phase.

6. The method according to any one of the preceding claims, wherein the solid content of the solid suspension (2, 4, 6) constitutes at least 60 % by mass of the total mass of the solid suspension (2, 4, 6).

7. The method according to any one of the preceding claims, wherein the solid phase of the solid suspension (2, 4, 6) consists of crystallized sugar and/or powdered sugar and the liquid phase consists of oil or fat.

8. The method according to any one of the preceding claims, wherein the pig (1) is pushed through the tubular cavity (10) at a speed of 0.01 m/s ≤ v ≤ 1 m/s.

9. The method according to any one of the preceding claims, wherein the solid suspension (2, 4, 6) is composed of at least supercooled chocolate beads and/or chunks as the solid phase and cocoa butter and/or chocolate as the liquid phase.

10. A device for cleaning a tubular cavity, configured as a passive, soluble pig suitable for expelling a predecessor product from the cavity, the pig (1) consisting of a solid suspension (2, 4, 6) with a high solid content compared to the product suspension (14) usually processed in the cavity (10) and being compressible to form a dense packing or forcible to form a dense packing by a subsequent propellant and the dense packing being so dense and stable that the pig (1) can expel a predecessor product (14) without the formation of mixed phases between the solid suspension (2, 4, 6) and the predecessor product (14), **characterized in that** the solid suspension (2, 4, 6) comprises a front section in the intended direction of travel of the pig (1), a solid suspension in the front section (6) having finer particles than a central section of the pig (1) with a solid suspension in the central section (4) having coarser particles, and a rear section, a solid suspension in the end section (2), in turn having finer particles than the central section of the pig (1).

11. The device according to claim 10, wherein the solid suspension (2, 4, 6) is composed, on the one hand, of supercooled particles or particles having a higher melting temperature and the same or a higher temperature than the liquid phase and forming a solid phase, and, on the other hand, of a liquid phase.

12. The device according to claim 11, comprising means for forming the solid suspension (2, 4, 6) and/or comprising means for introducing the solid suspension (2, 4, 6) into the tubular cavity (10).

13. The device according to any one of claims 10 to 12, configured such that the solid suspension (2, 4, 6) is formable in a section of the tubular cavity (10).

## Revendications

1. Procédé de nettoyage d'un espace creux tubulaire au moyen d'un écouvillon passif adaptatif au contour, dans lequel l'écouvillon (1) se compose d'au moins une suspension solide (2, 4, 6), qui est formée d'une phase solide et d'une phase liquide, avec une proportion solide élevée par comparaison à la suspension de produit (14) traitée habituellement dans l'espace creux (10) et est poussé par un milieu propulseur subséquent (12) ou par un compactage antérieur en un tassement dense et le tassement dense de l'au moins une suspension solide (2, 4, 6) présente une densité et une stabilité telles que la suspension de produit (14) du produit antérieur est évacuée sans l'apparition de phases mixtes entre l'au moins une suspension solide (2, 4, 6), le produit antérieur et/ou le milieu propulseur (12), dans lequel la phase solide de la suspension solide (2, 4, 6) se compose de particules qui ne se dissolvent pas dans la phase liquide ou ne se dissolvent que si peu que l'évacuation du produit antérieur n'est pas entravée, dans lequel l'écouvillon (1) présente une composition matérielle variant sur la longueur, dans lequel chaque région d'une composition exerce une autre fonction partielle, **caractérisé en ce qu'**un tiers avant dans la direction de déplacement de l'écouvillon (1) se compose de la première suspension solide (6) dont la phase solide se compose de fines particules d'une première taille particulaire qui étanchéifient l'écouvillon (1) contre la pénétration de la suspension de produit (14) du produit antérieur, une partie centrale de l'écouvillon se compose de la deuxième suspension solide (4) dont la phase solide présente des cristaux grossiers d'une deuxième taille particulaire qui est supérieure à la première taille particulaire et génère une action de nettoyage abrasive élevée sur une paroi tubulaire et l'absorption de la salissure détachée, et un tiers arrière se compose de la suspension solide (2) dont la phase solide est formée par de fines particules d'une troisième taille particulaire qui est inférieure à la deuxième taille particulaire, qui étanchéifient l'écouvillon par rapport au milieu propulseur (12), et nettoie la paroi tubulaire de résidus de salissure encore restants de faible épaisseur de couche.

2. Procédé selon la revendication 1, dans lequel un produit consécutif est prévu en tant que milieu propulseur (12).

3. Procédé selon la revendication 1, dans lequel un gaz sollicité en pression est prévu en tant que milieu propulseur (12).

4. Procédé selon une des revendications précédentes, dans lequel la phase solide de la suspension solide (2, 4, 6) possède une température de fusion supérieure à la phase liquide.

5. Procédé selon une des revendications précédentes, dans lequel une phase liquide avec des germes cristallins est mélangée de sorte que des cristaux se forment en son sein en tant que phase solide.

6. Procédé selon une des revendications précédentes, dans lequel la proportion solide de la suspension solide (2, 4, 6) occupe au moins 60 % de proportion massique de la masse totale de la suspension solide (2, 4, 6).

7. Procédé selon une des revendications précédentes, dans lequel la phase solide de la suspension solide (2, 4, 6) se compose de sucre cristallin et/ou sucre en poudre et la phase liquide se compose d'huile ou de graisse.

8. Procédé selon une des revendications précédentes, dans lequel l'écouvillon (1) est poussé avec une vitesse de 0,01 m/s ≤ v ≤ 1 m/s à travers l'espace creux tubulaire (10).

9. Procédé selon une des revendications précédentes, dans lequel la suspension solide (2, 4, 6) est composée au moins de billettes et/ou de hachage de chocolat surrefroidi(es) en tant que phase solide ainsi que de beurre de cacao et/ou de chocolat en tant que phase liquide.

10. Dispositif de nettoyage d'un espace creux tubulaire, réalisé en tant qu'écouvillon passif soluble, convenant à expulser un produit antérieur de l'espace creux, dans lequel l'écouvillon (1) se compose d'une suspension solide (2, 4, 6) avec une proportion solide élevée par comparaison à la suspension de produit (14) traitée habituellement dans l'espace creux (10) et peut être comprimé en un tassement dense ou peut être poussé par un milieu propulseur subséquent en un tassement dense et le tassement dense est si dense et stable que l'écouvillon (1) peut évacuer un produit antérieur (14) sans l'apparition de phases mixtes entre la suspension solide (2, 4, 6) et le produit antérieur (14), **caractérisé en ce que** la suspension solide (2, 4, 6) comprend une section avant dans la direction de déplacement prévue de l'écouvillon (1), une suspension solide (6) dans la région avant avec des particules plus fines qu'une partie centrale de l'écouvillon (1) avec une suspension solide (4) dans la région centrale avec des particules plus grossières, et une section arrière, une suspension solide (2) dans la région d'extrémité, avec de nouveau des particules plus fines que la partie centrale de l'écouvillon (1).

11. Dispositif selon la revendication 10, dans lequel la suspension solide (2, 4, 6) se compose d'un côté de particules surrefroidies ou de particules qui présentent une température de fusion supérieure et la même température ou une température supérieure à la phase liquide, et qui forment une phase solide, ainsi que de l'autre côté d'une phase liquide.

12. Dispositif selon la revendication 11, comprenant une installation pour la formation de la suspension solide (2, 4, 6) et/ou comprenant une installation pour l'introduction de la suspension solide (2, 4, 6) dans l'espace creux tubulaire (10).

13. Dispositif selon une des revendications 10 à 12, réalisé de telle sorte que la suspension solide (2, 4, 6) peut être formée dans une section de l'espace creux tubulaire (10).
